# EUROPEAN PATENT SPECIFICATION

(11) **EP 3 081 890 B1**
(45) Date of publication and mention of the grant of the patent: **29.08.2018**
(21) Application number: 16000672.2
(22) Date of filing: 19.03.2016
(51) Int. Cl.: F41B 7/04

(54) **AN UNDERWATER GUN WITH ELASTICS WITH A SIMPLIFIED LOADING SYSTEM**
UNTERWASSERPISTOLE MIT ELASTISCHEN ELEMENTEN MIT VEREINFACHTEM LADESYSTEM
FUSIL SOUS-MARIN AVEC ÉLASTIQUES AVEC UN SYSTÈME DE CHARGEMENT SIMPLIFIÉ

(30) Priority: 17.04.2015 IT PI20150028
(43) Date of publication of application: 19.10.2016
(73) Proprietor: Traversi, Gabriele, 57123 Livorno (IT)
(72) Inventor: Traversi, Gabriele, 57123 Livorno (IT)

(56) References cited:
- AU-B2- 453 720
- FR-A1- 2 272 363
- FR-A1- 2 899 060

## Description

### Scope of the invention

The present invention relates the technical field of the underwater spearguns.

In particular, the invention relates to an innovative underwater elastic-bands powered speargun that has its arming, obtained by tensioning the elastic bands, made assisted though the thrust of the user's legs.

### Description of the prior art

The underwater spearguns are by now well-known and widely used since long time.

Many types exists, including for example elastic bands type. These elastic bands spearguns, generally called with the name of "Arbalete", by now are among the most widespread spearguns because they combine, together with their power, superior speed characteristics, long range and low noise capabilities and in addition a particularly simple mechanics which guarantees longer life and minimal maintenance requirements.

A speargun (1) consists of a barrel (for example made of metal or wood), where on its top side, lays a spear (6) that generally lays on a guide track (12) in the form of a groove that goes along a part, or the entire length of the barrel itself. The barrel houses inside, in proximity of the handle (19), a locking / unlocking box composed by the trigger (9) and the locking / unlocking mechanism (11), which locks the end of the spear to the barell. The barrel thus forms, in proximity of the handle and to the end of the guide track (12), a seat where is installed in a sliding manner the end of spear (6) (the opposite side of the tip) in such a way as the spear (6) can be snap-in locked to the barrel (2) through said locking / unlocking mechanism (11). A rotation of the trigger (9) actuates the mechanism (11) which unlocks the spear which is fired at speed thanks to the thrust of the elastic band (14). For this purpose, the speargun (1) may mount one or more elastic bands (14) in the form of closed rings or bushed which pass through openings made on the head of the barrel (thus the opposite side of the handle). Once the spear (6) is laid on the frame, and after its bottom end is locked in the appropriate seat (11), the elastic band (14) can be pulled until they reach one of the fins (17) or notches machined into the spear itself. For this purpose, the elastic band (14) is closed on itself by means of a bridle of synthetic fibre such as Dyneema or through a metal wishbone (18), for the purpose, in both cases, to engage the fin (17) or notch in the spear (6). At this point, pulling the trigger (9), the locking / unlocking mechanism (11) disengages the spear (6) which is, thus, thrust at a distance by the thrust of the elastic band (14). Should be present a log-line, and a reel (8), that connects the spear (6) to the speargun (1), in such a way to allow an easy recover of it.

The thrust ranges are variable depending on the type of speargun (1), but may reach up to six meters with good penetration capability and precision. A medium range can go around three meters.

Another types of new generation spearguns, are based always on the concept of the use of elastics bands but, in this case, the elastic bands are passed around the pulleys installed in a fixed position, but revolving around their fulcrum, on the head to the frame. These types of spearguns have "Roller" as commercial name. These spearguns have the advantage of being much more powerful compared to the classic elastic band spearguns, having the same overall barrel length.

In all these cases, whether it is the traditional elastic band spearguns or Roller, a technical problem shared by these spearguns pertains the difficulty of the loading.

Such spearguns, especially if their length is greater than 100 cm, can also mount two or more elastic bands, which hardness can vary significantly depending on the diameter of the elastic band and its compound. When long range and penetration capacity are required, especially in the deep sea, fishing large pelagic fishes such as snappers or amberjack, it is therefore necessary to use long elastic bands spearguns and particularly reactive. This means that is necessary a very large effort for the user who must put the butt side of the barrel of the speargun (13) in correspondence of its sternum and then stretch out to the maximum capacity the arms and grasp the ends of the elastic bands (14 'and 14'') to pull them toward one of the fins (17) in the spear (6). It is more common than is thought, the case in which the effort is so high that can cause pain and injury to the sternum, despite the reinforcement plate usually present in the wetsuit worn by the spear fisherman. Also the pain is even more unbearable when is needed to load the speargun (1) several times during the fishing trip.

If the spear fisherman, moreover, is not a subject particularly tall and / or strongman, the loading of spearguns more than 100 cm long, may even be impossible, thus limiting the spearfishing trips.

Not least, the loading typology inevitably stresses the muscles of the neck and has implications for the spinal column, causing a flattening of the vertebrae of the neck, the whole with a serious risk of hernias, such as the cervical hernia.

Although the "Rollers" spearguns facilitate the loading procedure because, for the same required range, allow the use of softer elastic bands, however, the problem is not completely solved since the loading procedure remains the same, with the same risk to have wounds to the sternum or harms to the neck.

Is known for example the Patent Number FR2899060 which describes an underwater speargun equipped with an easy loading mechanism. The loading includes a tensioning system of the elastic band that consists of two thrust arms transversal to the barrel and around which passes the elastic bands. It is operable toward a forward position, thus towards the tip, in order to tensioning the elastic band, through a pushing system. Such pushing system provides a lever arm that must be operated by hand with a oscillating movement of a lever, the lever itself causes the movement to a forward position of a push spear inserted within a suitable seat in the barrel of the speargun. Said spear pushes forward said tensioning system mounted in a sliding manner in a seat always made in the frame.

It is obvious that such a system is extremely structurally complex because requires the installation of all these components on the speargun, moreover adding weight to the speargun that becomes heavier, difficult to balance and subject to many risk of failure. This inevitably has a negative effect on the swivelling and shooting accuracy.

Furthermore, the loading always takes place through the use of the arms. In particular while an hand must hold the speargun firmly, generally by gripping it through butt, the other hand has to actuate the lever making it pivoting repeatedly back and forth to move the tensioning system towards the tip of the spear, tensioning the elastic bands. This movement is not easy, especially since, necessarily, the speargun must be blocked during this movement with one hand, and by operating the lever mechanism using the other hand in opposition to the force required to hold it firm. This loading system is unwieldy and difficult.

It is also known the invention FR2272363 which corresponds to the pre-characterizing part of the present invention.

This publication describes a system that goes in a direction opposed to what is described in the above publication because, to facilitate the loading, is now used a system that permits the take advantage of the thrust of the legs instead of the arms. In this way the system partly solves the problems of the invention FR2899060 because describes an elastic band speargun equipped by a simple loading system and that, thanks to the use of the legs, allows an easy loading. In particular, the barrel is shaped in such a way to form in its ventral part some locking teeth (similar to saw teeth arranged in succession) and the elastic band, that form a closed ring, is provided with two transverse arms on which the feet can lean on. Is therefore sufficient to push with the feet, leaning on said transverse arms, in such a way that these arms slide along the ventral part of the barrel towards the barrel tip by latching in succession on the next tooth and therefore progressively tensioning the elastic.

This system is simple and, allowing the use of the legs for loading, it makes easier the loading operation as the legs are able to express much more force and without overloading the neck and the back.

However also this system, for as conceived, is not free from technical problems.

In particular, the elastic band is almost free, and therefore during the loading, being free to oscillate and swing, is not easy to put it in the correct position in the first tooth to start the loading. Once the shot is done there is also the risk that the elastic band is projected away from the barrel together with the spear, thus requiring the recovery and the setup not at all in a comfortable position and even at the risk of affecting the accuracy of the shot.

### summary of the invention

It is therefore increasingly felt the need of an underwater elastic band speargun (1), which can solve the above technical disadvantages.

In particular it is scope of the present invention to provide an underwater speargun (1) provided with elastic bands (and thus to one or more elastic bands), which could be easily loaded, while maintaining unchanged own power performance, speed and range or even increasing them.

It is also scope of the present invention to provide a speargun in which it is possible the use of the legs for the loading but, at the same time, the elastic bands tensioning system not only doesn't risk to escape away from the speargun after firing, but also it always results in a comfortable position to arrange another loading.

These and other scopes are therefore obtained with the present speargun (1) according to claim 1.

This speargun (1) comprises:
- A barrel (2) that supports a spear (6), the barrel having an area (5) used for the provision of an handle (19) and an area (5 ') opposite to said area;
- Tensioning means (7, 16) for tensioning one or more elastic bands (14) through which fire the spear (6).

Said tensioning means (7, 16) having a tensioning device (7) arranged in a sliding manner with respect to the barrel (2) in a manner such that its sliding in the direction that goes from the area (5) towards said end area (5') causes the tensioning of the elastic band (14), properly prepared. Moreover, this tensioning device is further configured to allow the resting of the feet of the user, in a manner that said sliding movement can be done by the thrust of the legs.

In this way the tensioning takes place, in fact, with a forward movement of the said tensioning device, movement that can thus be done using the legs, for example, holding the speargun (1) from the handle (19) and after resting the feet on such tensioning device then pushing it by legs movement to slide toward the tip of the spear (6).

Are also provided further locking means (3, 4) to lock the tensioning device (7) to the frame, after the said sliding movement, in a selected position.

In this way, the loading procedure is similar to the publication FR2272363.

In particular the elastic bands are not pulled towards the handle (19) using the arms as commonly done by tradition, much less, using complex linkages, as in FR2899060, to tension the elastic bands but, rather, the rubber bands are pushed in tension thanks to a device that moves in the opposite direction, thus towards the tip of the spear (6). In reason of the fact of such tensioning direction that is possible to use the sliding of such device with the use of the legs, and, by properly configuring the tensioning device (7) and holding the speargun (1) from the handle (19) while pushing by legs. In this way sternum and neck muscles are not stressed.

According to the invention, unlike what is described in FR2272363, the barrel (2) comprises a sliding corridor (10) within which is arranged slidably said tensioning device (7), such sliding corridor being closed anteriorly and posteriorly (i.e. blind both front and rear sides, thus determining the forward and rear travel end points).

In this way they are solved all of the aforementioned technical drawbacks.

The tensioning system, now being constrained within the said sliding corridor, can no longer be expelled away from the barrel after firing, in particular thanks to the fact that this corridor is, as mentioned before, closed at the front and rear sides.

In addition, the tensioning system is guided in its path from that corridor. This optimizes the performance of firing and binds the entire tensioning system to remain in a configuration, after firing, which makes easier the subsequent loading.

In French document FR2272363, instead, the tensioning system may run away or, at least, squirm in uncomfortable positions for the subsequent reloading procedure, because the elastic band, not being placed in any corridor, can loosely hang from the barrel of the speargun.

Additional advantages can be derived from the dependent claims.

### Brief Description of Drawings

Further characteristics and advantages of the present speargun, according to the invention, will be clearer with the following description of an embodiment thereof, exemplifying but not limitative, with reference to the annex drawings, where:

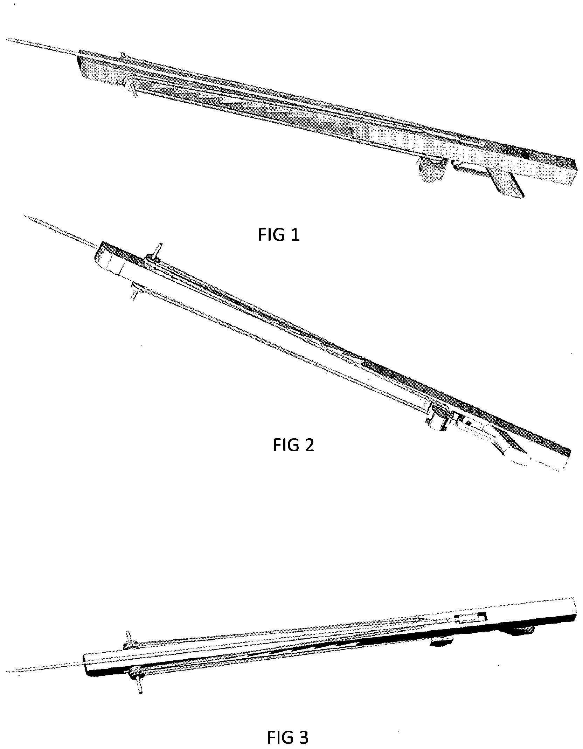

- Figures 1 to 3 show three views of the gun according to the present invention;

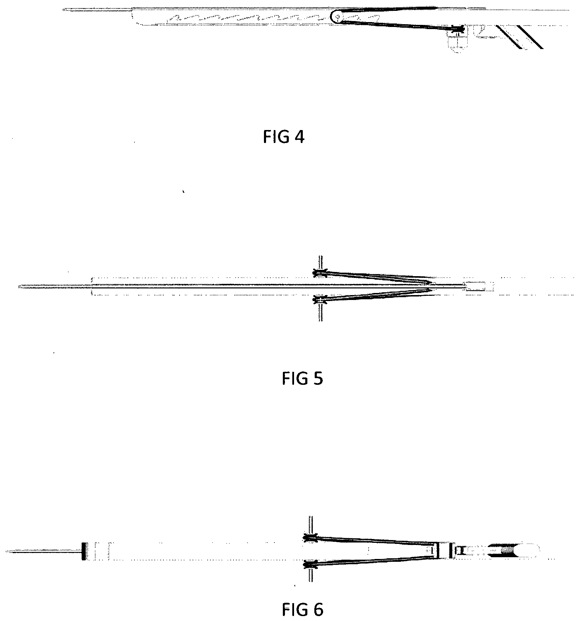

- Figure 4 shows a side view;
- Figure 5 shows a view from above;
- Figure 6 shows a view from below;
- Figures from 7 to 8 are used to identify the components according to the present invention;
- Figures 9 to 10 show a detail of the speargun with the arms (20) of the fixed type (Figure 9) or folding type (Figure 10),in other words the tensioning device (7) used for tensioning elastic bands of the speargun;
- Figure 11 shows the speargun with the elastic bands disconnected by the small fin of the spear;
- The sequence of figures from 12 to 14 shows how to load the speargun;
- Figures 15 to 17 show the speargun in the loaded configuration in correspondence with a desired loading position;
- The figure 18 shows the detail of the connection axis (7');
- Figure 19 shows the arms (20): one in the extended position and the other in the folded position.

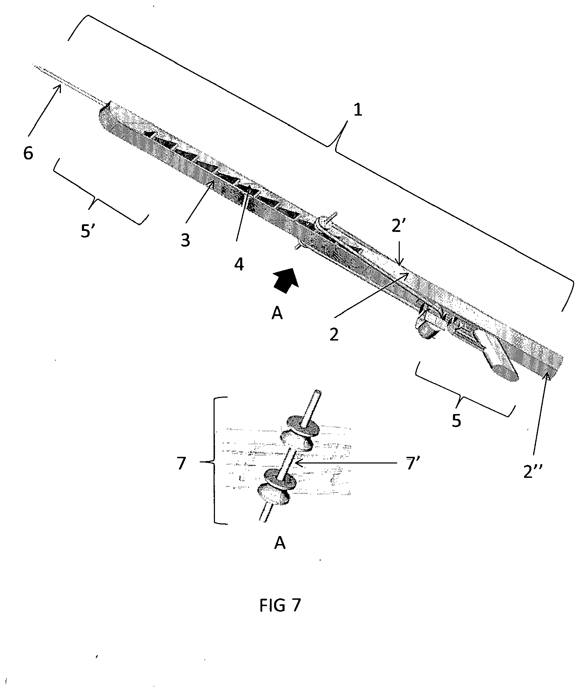

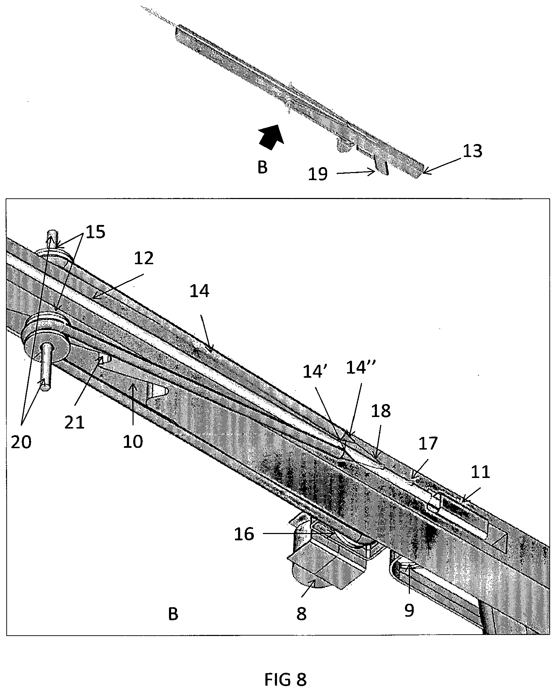

To facilitate the comprehension of the numerical markings on the drawings, and in particular reference to Figures 7 and 8, see the legend that follows:

| No. | Description |
|---|---|
| 1 | Underwater speargun |
| 2 | Barrel |
| 2' | Back side of the barrel |
| 2" | Ventral side of the barrel |
| 3 | Strip |
| 4 | Teeth |
| 5 | Grip area |
| 5' | Opposed end area |
| 6 | Spear |
| 7 | Tensioning Device |
| 7 | Connection axis |
| 8 | Reel |
| 9 | Trigger |
| 10 | Sliding corridor |
| 11 | Locking / Unlocking Mechanism |
| 12 | Spear Guide track |
| 13 | Speargun butt |
| 14 | Elastic bands |
| 14' | Elastic band end |
| 14" | Elastic band end |
| 15 | Pulleys |
| 16 | Lower Pulley |
| 17 | Fin |
| 18 | Wishbone |
| 19 | Handle |
| 20 | Arms |
| 21 | Seat Between Two Teeth |

### Description of a preferred embodiment

The Figures 7 and 8 describe through two axonometric views a speargun (1) according to the present invention.

The speargun includes a barrel (2) which forms a back (2 ') and a ventral part (2' '). The back serves as a support for a spear (6) and can eventually provide a spear guide track (12) in the form for example of a groove running longitudinally along a part or the entire length of the back itself and that follows the profile of the spear (6) (therefore semi-circular shape). The spear guide track (12) can possibly be realized in other forms such as a simple ring for passage of the spear (6).

This spear guide track (12), being well known and not being specific object of the present invention, it is not further detailed here.

The speargun (1) is provided of an handle (19) placed in an area near the butt (13) and, an locking / unlocking mechanism (11) controlled by a trigger (9) and through which lock and release the spear (6). The locking / unlocking mechanism (11), as well as the trigger (9), are known standard systems, purchased separately and easily mounted on each frame. They are not specific object of the present invention and, for that reason, are not further detailed here.

According to this invention, the barrel (2) of the speargun (1) in its ventral part (2 ") is machined to have a plurality of teeth (4) or notches (similar to saw tooth) that operate, as better clarified in the following, to lock to a desired position the tensioning device (7) of the elastic band (14). For this purpose, these teeth are formed in succession one behind the other.

For example, if the speargun is machined from solid wood, then the barrel can be worked with machine tools in such a way that it can be shaped to form such notches.

Alternatively it could be possible create a strip of notches and then attach them to the barrel of a speargun.

These tooth can be in any number, depending on: the type of speargun, the size and the maximum power required. They can also be prepared in the ventral side of the barrel in any desired place.

Always as shown for example in figure 7 and in figure 8, is provided a surface (3), for example in the form of a strip, preferably rigid, which is connected to the ventral part (2 ") from its two extremes and which closes said teeth (4). In this manner, as better clarified in the following, it therefore creates a sliding corridor (10) through which the tensioning device (7) can slide toward the tip of the spear (6) or, in the opposite direction, toward the handle (19) to be locked at a selected position. Moreover, this strip also stiffen the barrel of the speargun weakened by the creation of the sliding corridor (10) and thus contributing to the reduction of inflections during the loading. A consequence of these inflections is the inaccuracy conditions on shooting.

The strip (3), also, prevents the fall by gravity of the tensioning device (7) helping to keep it in position within the sliding corridor (10), especially after firing when the elastic bands are unloaded and must be reloaded.

This facilitates reloading and proper operation during firing.

This strip can therefore be applied in a removable way through screws or be permanently fixed, using glues.

The corridor is obviously blind, this means that is closed, on the forward and rear sides in such a way as to limit the stroke of the elastic band preventing accidentally the exit from forward and / or rear sides after firing.

Preferably this strip can thus be realized in materials such as fiberglass, carbon fibres and similar. It is not excluded the realization with metallic or wooden materials, for example, also machined from the solid wood during the machining of the barrel (in this case, it is integral to the barrel).

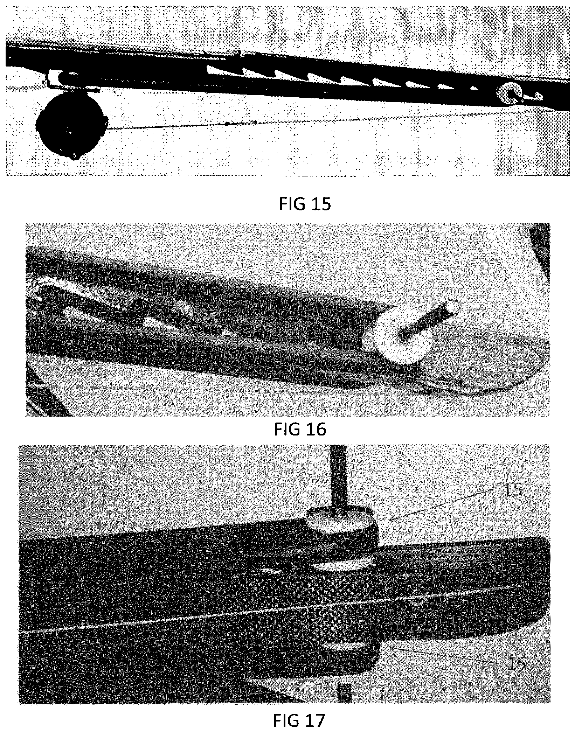

Figure 17 shows such strip (3) from the bottom, which can also be in the form of a particularly hard tissue and fixed at its ends to the ventral side (2 ") of the barrel.

The tensioning device (7) is for example visible in the detail "A" of Figure 7.

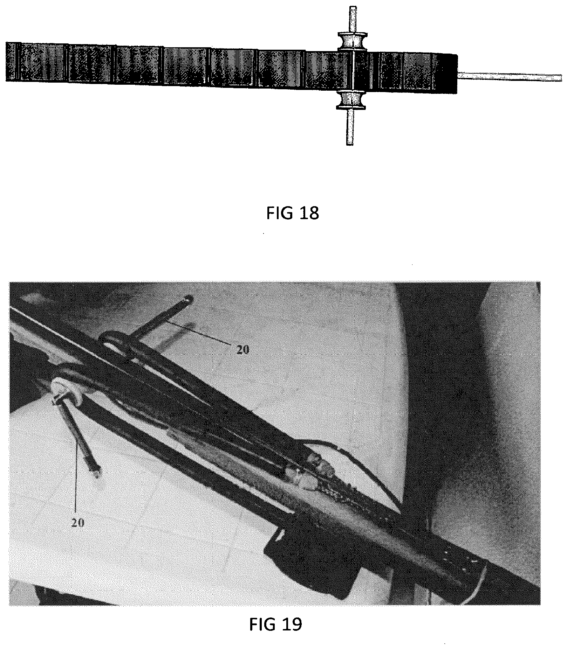

Such tensioning device (7) comprises two pulleys (15) (see Figure 8 and 17) opposite one to each other, adjacent each one to a side of the barrel. The two pulleys (15) swivel around the axis of the tensioning device (7). The lateral movement of the two pulleys (15) is prevented from one side by the barrel (2) and on the other by suitable locking devices, such as retaining rings (Seeger). This axis is shown in the particular "A" of Figure 7, while in Figure 18 is locked on a specific tooth (4). Differing since every known art, each pulley is not arranged fixed with respect to the barrel but, on the contrary, there is a common axis which connects these two pulleys and that axis can slide along the barrel.

In fact, therefore, similarly to the wheels of a car there are two pulleys rotatable mounted, connected to a tensioning device (7) slidable along the barrel.

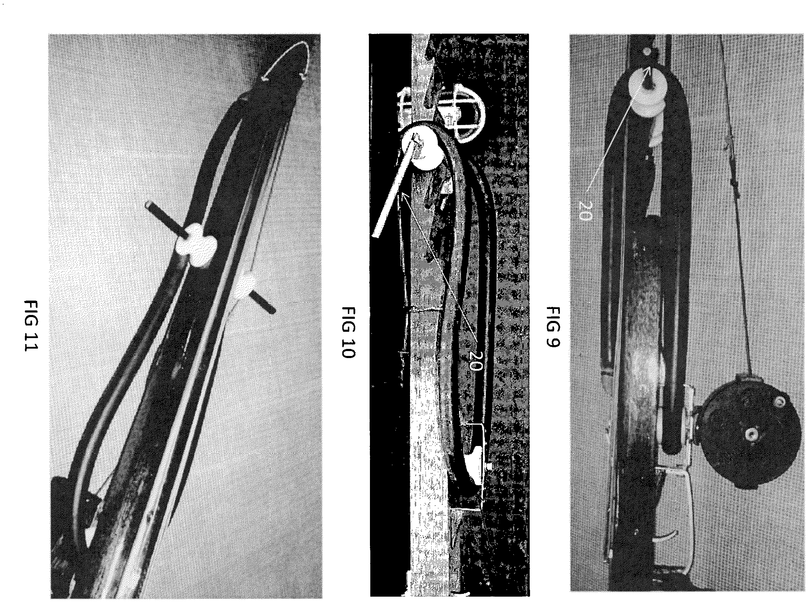

For each pulley, as shown for example in Figure 9, 10 and 11, are provided arms (20) integral with the tensioning device (7) which serve for loading, as explained below.

These arms (20) can be made in a manner that can be folded between two extreme position or can be rigid and emerging towards the outside of the barrel.

For example, in the case of folding arms, Figure 19 shows an arm (20) folded towards the pulley (closed position) and the other arm (20) spread in such a way as to be in axis with the axis of the two pulleys (extended position). Figure 8 shows for example the two arms (20) both in the "extended" position, and thus such as to allow the loading of the speargun, as described below.

Therefore, as explained in the following paragraphs, these arms (20) when they are in the position "extended", along with the connection axis of the pulleys, form the extensions through which it is possible to push forward the tensioning device (7) toward the tip of the spear (6), tensioning the elastics bands.

Figure 10 and Figure 11 show the elastic bands path.

The elastic band (14) has a filiform shape and two ends (14 'and 14' '). As shown in figure 11, starting from one of these ends (example 14'), the elastic goes to a pulley (15) and revolving around it in such a way to bend to the opposite direction, towards the handle (19). A third pulley (16), connected in the ventral part of the barrel (2) in such a way that its axis of rotation is substantially orthogonal to that the ventral part of the barrel (Figure 10 shows the third pulley). This pulley can therefore swivel but is fixed with respect to the barrel (i.e. not translatable). The elastic band turns around said pulley (16) to move to the opposite side of the barrel and going towards the other pulley (15) and, from here, to come back in such a way that the two ends (14 'and 14' ') are side by side above the spear (6).

As already known in the state of the art, a thread of synthetic fibre such as Dyneema (18) is fixed to said ends (14 'and 14' ') in such a way as to form a bridle (or possibly a wishbone also metallic) that is attached to the spear (6). For example in Figure 19 such wishbone is attached to a fin (17) of the spear (6).

The elastic therefore takes the form of a closed ring that runs around the two pulleys (15) and the pulley (16) .

At this point it is clear the loading of this speargun.

To carry out the loading is sufficient to insert the spear (6) and lock it as usual, put the elastic bands around the two pulleys (15) and bind the wishbone (18) of the elastic band (14) at a specific fin (17). Initially, the tensioning device (7) is placed in the speargun notches or teeth (4) closest to the handle (19) in such a way that, as shown in figure 9 and 10, the elastic bands are normally not tensioned (see also figure 19).

To load the speargun is sufficient to rotate the arms (20) in an "spread position" so as to create two support constraints for the user's feet; that operation is also possible with fins on.

As mentioned before, such arms may be in a fixed manner, that is, not foldable.

To load the speargun it is therefore necessary to advance the pulleys (15) towards the tip of the spear (6) in such a way that their movement (jointly with the axis of connection (7 ')) causes the tensioning of the elastic bands that passes around said pulleys (15).

The figures from 12 to 14 therefore show the loading sequence with legs that push the tensioning device (7) to tensioning the elastic band (14) while Figure 15 shows the loading position reached and selected.

Contrary to the prior art therefore, the loading that is the tensioning of the elastic band (14), now take place with an advancement of the tensioning device (7) (pulleys (15) and their connecting axis (7 ')) in the direction towards the tip of the spear (6). A reduction of the tensioning can be obtained by moving said tensioning device (7) in the opposite direction: towards the handle (19), always within the sliding corridor (10).

Each face of the teeth (4) facing the end (5 ') represents a locking point within is inserted the connection axis (7') of the two pulleys (15). In particular, each step establish a snap-in locking because the connection axis (7') of the two pulleys (15) climbs over a tooth (4) and is inserted in the seat (21) formed by the previous tooth and the next one, and it is maintained in position thanks to the tension of the elastic band (14) that pushes it just before of this seat (21).

This solution not only is easier for the loading but is also safe in case of slipping of the feet that lose the grip to the arms (20). In this case the force of the elastic feedback pushes back the tensioning device (7) which, however, goes automatically to lock in the closest rear seat, so avoiding strong kickback or risk of breakage of the tensioning device (7) itself.

The teeth (4) can have any shape but their profile is generally optimized to facilitate the advancement of the tensioning device (7) into the box (5 ') and therefore the tooth overtaking to the next one, and at the same time to prevent the overtaking of the tensioning device (7) of a tooth to the previous towards the grip area (5). At each tooth overtaking the axle locks in the seat (21) formed by the tooth itself and the next.

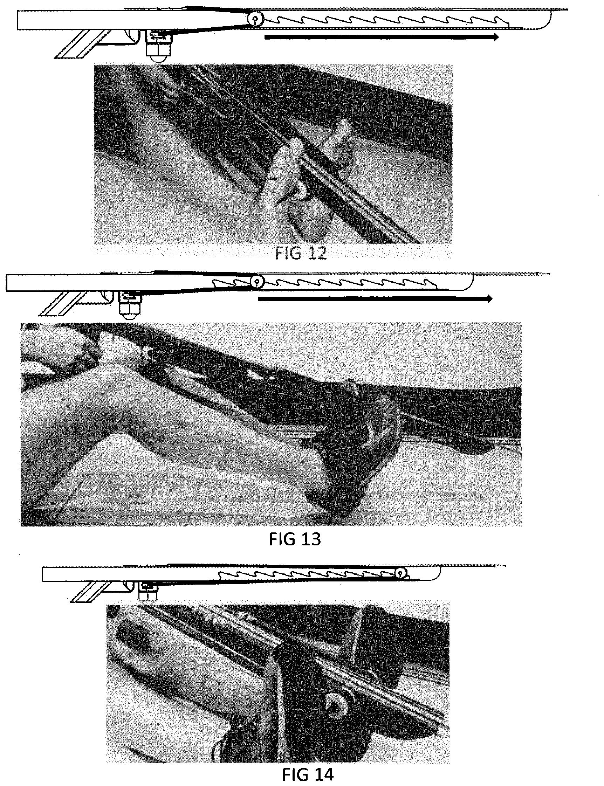

Thereby taking the speargun with the hands through the handle (19) it is possible to carry out this thrust of the tensioning device (7) through the legs by placing the feet on the two arms (20) placed, if required, in the extended position. In this way it can be possible gradually advance the pulleys (15) from tooth (4) to next tooth (4) toward the front area (5 ') thus selecting the chosen tension in correspondence with a tooth (see precisely the sequence from Figure 12 at 14).

Reached the desired tensioning value, the speargun is ready for use and the arms (20) can be retracted in the closed position to minimize friction with the water and ease the manoeuvrability of the speargun.

According to the present invention, the described speargun can be made of any material, also metal, and with the handle (19) made from the same solid piece of the barrel or made separately and then attached to the barrel.

Obviously although described a single pair of pulleys with the passage of only one elastic, the present invention can be modified with more pulleys and more axes and therefore allowing the use of two or more elastic bands.

## Claims

1. A speargun (1) comprising:
- A barrel (2) to support a spear (6), the barrel comprising an area (5) intended for the housing of a handle (19) and one end (5 ') opposite to said area (5) ;
- Tensioning means (7, 16) for tensioning one or more elastic bands (14) applicable to the barrel and through which hurl the spear (6);
- Said tensioning means (7, 16) comprising a tensioning device (7) arranged in a sliding manner with respect to the barrel (2) in a such a manner that its sliding in the direction that goes from said area (5) towards said end (5 ') causes the tensioning of the elastic band (14) arranged in use, said tensioning device (7) being further configured to allow the resting of the feet of the user in such a way to be able to cause its sliding movement by the thrust of the legs;
- And wherein locking means (3, 4) are further comprised to lock, as a result of said sliding movement, said tensioning device (7) in a selected position;
- **Characterized in that** it includes a sliding corridor (10), within which is arranged slidably said tensioning device (7), said sliding corridor being closed at the front and rear.

2. A underwater speargun (1), according to claim 1, wherein the tensioning device (7) comprises at least two pulleys (15) connected between them through a central axis (7'), the axis being configured to lock in the preselected position through said locking means (3, 4) .

3. A underwater speargun (1), according to claim 2, wherein each pulley includes further arms (20) emerging from the tensioning device (7) and arranged in such a way that, through said arms (20), the user can push the tensioning device (7) through the use of the legs.

4. A underwater speargun (1), according to claim 3, wherein said arms (20) are movable between a retracted position and an extended position, or are fixed.

5. A underwater speargun (1), according to one or more of the preceding claims, wherein said tensioning means (7) further comprises a pin (16), preferably a pulley (16), fixed to the ventral part (2 ") of the barrel (2) to form an anchor point of the elastic bands (14).

6. A underwater speargun (1), according to one or more of the preceding claims, wherein said locking means (3, 4) comprise a plurality of teeth (4) arranged in succession in correspondence with the ventral part (2 ") of the barrel.

7. A underwater speargun (1), according to one or more of the preceding claims, wherein is provided a strip (3) arranged below said succession of teeth (4) in such a way as to form said sliding corridor (10) bounded upwardly by said locking means (3, 4) and below by said strip (3).

8. A underwater speargun (1), according to claim 7, wherein said strip (3) is made of rigid material.

9. A underwater speargun (1), according to claim 7 or 8, wherein said strip (3) is removable or integral to the barrel.

10. A underwater speargun (1), according to one or more of the preceding claims, wherein is provided at least one elastic element (14) which passes through the tensioning device (7) and the pulley (16) so as to be tensioned by progressive displacement of the tensioning device (7).

## Patentansprüche

1. Die Unterwasser-Harpune (1) besteht aus:
- einem Lauf (2) zum Abstützen eines Speers (6), der Lauf (2) hat einen hinteren Bereich (5) zum Aufnahme eines Griffs (19) und gegenüberliegend eine vorderen Bereich (5 ');
- Spannvorrichtungen (7, 16) zum Spannen eines oder mehrerer elastischer Bänder (14), die auf den Lauf vorhanden sind und durch die der Speer (6) geschleudert wird;
- die Spannvorrichtungen (7, 16) bestehen aus der Spannvorrichtung (7), die gleitend auf den Lauf (2) derart angeordnet ist, dass sie in der Richtung gleitet, die von dem Bereich (5) in Richtung des Laufs (2) zum Endstücks (5 ') verläuft, dies bewirkt das Spannen des im Bereich angeordneten elastischen Bandes (14), wobei die Spannvorrichtung (7) auch dazu ausgebildet ist, das Aufliegen der Füße des Benutzers derart zu ermöglichen, dass durch den Stoß der Beine eine Gleitbewegung bewirkt werden kann,
- wobei die Verriegelungsvorrichtungen (3, 4) während der Gleitbewegung die Spannvorrichtung (7) in einer ausgewählten Position verriegeln;
- **dadurch gekennzeichnet, daß** sie einen Gleitgang (10) vorhanden ist, in dem die Spannvorrichtung (7) verschiebbar angeordnet ist, wobei der Gleitgang vorne und hinten geschlossen ist.

2. Die Unterwasser Harpune (1), gemäß Forderung 1, besitzt eine Spannvorrichtung (7). Die Spannvorrichtung (7) besteht aus zwei Riemenscheiben (15), die durch eine Mittelachse (7 ') verbunden sind. Die Mittelachse ist so konfiguriert ist, dass sie im vorgewählten Zustand einrastet und die Position der Verriegelungs-vorrichtungen (3, 4) hält.

3. Die Unterwasser Harpune (1), gemäß Forderung 2, besitzt zwei Rollen (15), wobei jede Rolle (15) eine Achse (20) beinhaltet, die aus der Spannvorrichtung (7) heraus ragt und so angeordnet ist, dass der Benutzer über diese Achsen (20) die Spannvorrichtung (7) mit den Beinen drücken und somit spannen kann.

4. Die Unterwasser-Harpune (1), gemäß Forderung 3 wird gewährleistet, dass die Arme (20) zwischen einer eingefahrenen Position und einer ausgefahrenen Position bewegbar sind oder befestigt sind.

5. Die Unterwasser Harpune (1), gemäß einem oder mehreren der vorstehenden Ansprüche , weiterhin besitzt die Spannvorrichtung (7) einen Stift (16), vorzugsweise eine Bandscheibe (16), die an ventralen Teil (2 '') des Laufs (2) befestigt ist, um einen Ankerpunkt für die elastischen Bänder (14) zu bilden.

6. Die Unterwasser-Harpune (1), gemäß einem oder mehreren der vorstehenden Ansprüche, besitzt als Verriegelungsvorrichtungen (3, 4) eine Mehrzahl von Zähnen (4), die nacheinander in Übereinstimmung mit dem ventralen Teil (2 ") des Laufes (2) angeordnet sind.

7. Die Unterwasser-Harpune (1), gemäß einem oder mehreren der vorstehenden Ansprüche, weiterhin ist ein Seitenstreifen ab der Verriegelungsvorrichtung (3) enthalten, der unter der Reihe der Zähne der Verriegelungsvorrichtung (4) derart angeordnet ist, dass er den Gleitkorridor (10) durch die Verriegelungsvorrichtungen (3, 4) nach oben und durch den Seitenstreifen der Verriegelungsvorrichtung (3) nach unten begrenzt.

8. Die Unterwasser-Harpune (1), gemäß Forderung 7, der Seitenstreifen der Verriegelungseinrichtung (3) besteht aus steifem Material.

9. Die Unterwasser-Harpune (1), gemäß Forderung 7 oder 8, der Seitenstreifen der Verriegelungsvorrichtung (3) ist abnehmbar oder in dem Lauf (2) integriert.

10. Die Unterwasser-Harpune (1), gemäß einem oder mehreren der vorstehenden Ansprüche, besitzt mindestens ein elastisches Band (14), welches die Spannvorrichtung (7) und die Bandscheibe (16) durchläuft um durch progressives verschieben der Spannvorrichtung (7) dieses unter Spannung setzt.

## Revendications

1. Un fusil (1) sous-marin comprenant:
- un fût (2) pour pouvoir supporter une lance (6), le fût comprenant une surface (5) destinée à accueillir une poignée (19) et une extrémité (5') opposée à cette surface (5);
- des moyens de tension (7,16), pour mettre en tension un ou plusieurs éléments élastiques (14) applicables au fût et servant à déclencher le lancement de la lance;
- les susdits moyens de tension (7,16) comprennent un dispositif de mise en tension (7) qui est coulissant par rapport au fût (2) et qui, lorsqu'il coulisse de la surface (5) en direction de la surface (5'), génère une tension de l'élément élastique utilisé, tel moyen de tension (7) étant ultérieurement configuré pour loger les pieds de l'utilisateur de manière à le faire coulisser avec la pression des jambes;
- des moyens de blocage (3,4) pour fixer le dispositif de mise en tension (7), suite à son glissement, dans une position choisie.
- **Caractérisé par le fait: qu'**il inclut une glissière (10) dans laquelle est logé le dispositif de mise en tension (7), la glissière étant fermée à ses extrémités antérieure et postérieure.

2. Un fusil (1) sous-marin, selon la revendication 1, dont le dispositif de mise en tension (7) inclut au moins deux poulies (15) connectées entre elles par un axe central (7'), l'axe étant configuré pour se bloquer dans la position choisie grâce aux susdits moyens de blocage (3,4).

3. Un fusil (1) sous-marin, selon la revendication 2, dont chaque poulie prévoit des bras supplémentaires (20) sortant du dispositif de mise en tension (7) et déployés de manière à que l'utilisateur puisse exercer une pression sur le dispositif en poussant avec ses jambes.

4. Un fusil (1) sous-marin, selon la revendication 3, dont les susdits bras (20) sont mobiles entre une position rétractée et une position déployée, ou bien sont en position fixe.

5. Un fusil (1) sous-marin, selon une ou plusieurs des précédentes revendications, dont le susdit moyen de mise en tension (7) inclut un pivot supplémentaire (16), de préférence une poulie (16), fixée à la partie ventrale (2") du fût (2) pour former un point d'ancrage de l'élément élastique (14).

6. Un fusil (1) sous-marin, selon une ou plusieurs des précédentes revendications, dont les susdits moyens de blocage (3,4) incluent une succession de dents (4) disposées en série et en correspondance de la partie ventrale (2") du fût.

7. Un fusil (1) sous-marin, selon une ou plusieurs des précédentes revendications, équipé d'une bande (3) située au dessous de la susdite succession de dents (4) de manière à former la susdite glissière (10) délimitée supérieurement par les susdits dents (4) et inférieurement par la susdite bande (3).

8. Un fusil (1) sous-marin, selon la revendication 7, dont la susdite bande (3) est en matériel rigide.

9. Un fusil (1) sous-marin, selon les revendications 7 ou 8, dont la susdite bande (3) est amovible ou bien intégrée au fût.

10. Un fusil (1) sous-marin, selon une ou plusieurs des précédentes revendications, équipé d'au moins un élément élastique (14) passant par le dispositif de mise en tension (7) et la poulie (16) de manière à être mis en tension par le glissement du dispositif de mise en tension (7).
